# EUROPÄISCHE PATENTSCHRIFT

(11) **EP 2 579 741 B1**
(45) Veröffentlichungstag und Bekanntmachung des Hinweises auf die Patenterteilung: **02.05.2018**
(21) Anmeldenummer: 11725896.2
(22) Anmeldetag: 06.06.2011
(51) Int. Cl.: A45B 9/00, A63C 11/22

(54) **STOCK MIT STOSSDÄMPFER**
POLE HAVING A SHOCK ABSORBER
BÂTON AVEC AMORTISSEUR DE CHOCS

(30) Priorität: 14.06.2010 CH 9482010
(43) Veröffentlichungstag der Anmeldung: 17.04.2013
(73) Patentinhaber: Lekisport AG, 6340 Baar (CH)
(72) Erfinder: HEIM, Eberhard, 72669 Unterensingen (DE); HOFER, Marco, 73326 Deggingen (DE)
(74) Vertreter: Bremi, Tobias Hans
(86) Internationale Anmeldenummer: PCT/EP2011/059265
(87) Internationale Veröffentlichungsnummer: WO 2011/157580

(56) Entgegenhaltungen:
- EP-A1- 1 327 468
- WO-A1-2009/003298

## Beschreibung

### TECHNISCHES GEBIET

Die vorliegende Erfindung betrifft einen Stock, wie beispielsweise einen Trekking-, Ski-, Wander-, oder Nordic-Walking-Stock, der einen Stockgriff, ein Stockrohr, und eine Stockspitze aufweist. Jeweils benachbarte Rohrabschnitte können dabei relativ zueinander verstellbar sein. Der erfindungsgemässe Stock weist eine Dämpfungsvorrichtung mit einer drehfest gehaltenen Führungshülse auf, in der eine Stange axial beweglich geführt ist.

### STAND DER TECHNIK

Aus dem Stand der Technik sind verschiedene Stöcke mit Stossdämpfer bekannt, so z.B. in der DE-U-298 13 601 und der CH 680 771 A5, welche aber beide nur eine relativ harte Stossdämpfung ermöglichen. Die EP 1 435 805 B1 offenbart einen Stock mit Dämpfung, dessen Stosseigenschaften dank einer speziellen seriellen Anordnung der Druckfedervorrichtung weniger hart und dessen Rückfederungseigenschaften weniger ruckartig und rückstossfreier im Vergleich zu den ersten beiden erwähnten Dokumenten sind.

Aus der EP 1327468 ist eine Dämpferkonstruktion für eine Dämpfung innerhalb eines Stockgriffes bekannt, bei welcher eine Hülse bis auf einen Flansch in einem Innenrohr gelagert ist, wobei diese Hülse ein nach oben offenes Sackloch aufweist. Auf der anderen Seite ist am Stockgriff eine Stange befestigt, welche in diesem Sackloch gleitet, und zwischen Stange und Boden des Sacklochess ist eine Spiralfeder angeordnet. Die Federung befindet sich mit anderen Worten vollständig im Inneren des Innenrohres genau so wie ein entsprechender Mechanismus, der die axiale Beweglichkeit von Stange und Hülse begrenzt. Daran ist nachteilig, dass dieser Mechanismus nur so lange zugänglich ist, wie die Hülse nicht im Innenrohr befestigt ist.

Die WO2009/003298 betrifft einen Stock, wie beispielsweise einen Trekking-, Ski-, Wander-, oder Nordic-Walking-Stock, der einen Stockgriff, ein Stockrohr aus mindestens drei teleskopierbaren Rohrabschnitten, und eine Stockspitze aufweist. Zwei benachbarte Rohrabschnitte sind jeweils relativ zueinander verstellbar. Der Stock weist eine Dämpfungsvorrichtung mit Druckfedervorrichtung auf, wobei ein an einem zweiten Rohrabschnitt axial festgehaltener Achsstift in einer in einem ersten Rohrabschnitt drehfest gehaltenen Führungshülse geführt ist. Auch hier befindet sich die Federung vollständig im Inneren des Innenrohres genau so wie ein entsprechender Mechanismus, der die axiale Beweglichkeit von Stange und Hülse begrenzt.

### DARSTELLUNG DER ERFINDUNG

Es ist entsprechend Aufgabe der vorliegenden Erfindung, eine verbesserte Dämpfungsvorrichtung für einen Stock, insbesondere Trekking-, Ski-, Wander-, oder Nordic-Walking-Stock, zur Verfügung zu stellen. Dabei kann es sich um eine Dämpfungsvorrichtung handeln, welche zwischen zwei verschieblich und verstellbar angeordneten, ineinander gleitenden Rohrabschnitten mit einer Spreizvorrichtung ausgebildet ist (Teleskop-Stöcke), es kann sich aber auch um eine Dämpfungsvorrichtung handeln, welche unmittelbar am Stockgriff, konkret im wesentlichen im Inneren des Stockgriffes, angeordnet ist und eine Federung zur Verfügung stellt. Eine solche Federung im Stockgriff kann sowohl bei konventionellen nicht verstellbaren Stöcken Anwendung finden, kann aber auch bei Teleskop-Stöcken Anwendung finden. Insbesondere bei Letzteren, wenn diese außen liegende Klemmmechanismen für die Verstellung der Rohrabschnitt relativ zueinander aufweisen, da dann Federungen bei diesen Verstellmechanismen nicht so einfach vorgesehen werden können.

Normalerweise umfasst eine solche Dämpfungsvorrichtung dabei eine Befestigungshülse, mittels welcher die Dämpfungsvorrichtung an einem ersten Rohrabschnitt durch Einschub und Befestigung in diesem fixiert wird. Zudem umfasst sie normalerweise ein Befestigungselement, mittels welchem die Dämpfungsvorrichtung an einem Stockgriff oder einem zweiten Rohrabschnitt mit gerade etwas größerem Innendurchmesser als dem Außendurchmesser des ersten Rohrabschnittes befestigt wird.

Dabei ist das Befestigungselement bezüglich Befestigungshülse in axialer Richtung gefedert verschieblich gelagert, indem eine mit dem Befestigungselement verbundene oder einstückig mit diesem ausgebildete axial verlaufende Stange vorgesehen ist, welche in der Befestigungshülse axial verschieblich gelagert ist und sich in einen zum Befestigungselement offenen Innenraum in der Befestigungshülse hinein erstreckt. Der Innenraum ist dabei in Form eines Sackloches ausgebildet und zwischen dem Boden des Sackloches und dem freien Ende der Stange ist wenigstens ein Federelement angeordnet. Erfindungsgemäß weist die Befestigungshülse einen das dem Befestigungselement abgewandte Ende bildenden Befestigungsabschnitt auf, welcher im wesentlichen vollständig im ersten Rohrabschnitt liegt, sowie einen dem Befestigungselement zugewandten freiliegenden Bereich, der über das freie Ende des ersten Rohrabschnitts hervor steht. Im Übergang zwischen dem Befestigungsabschnitt und dem freiliegenden Bereich gibt es typischerweise einen den Außendurchmesser in Form einer Stufe erweiternden umlaufenden Absatz, an welchen die umlaufende Randkante des ersten Rohrabschnitts in Anschlag kommt.

In diesem freiliegenden Bereich ist dabei wenigstens ein Führungselement angeordnet, welches sowohl die axiale Beweglichkeit von Befestigungshülse und Befestigungselement in axialer Richtung begrenzt als auch die relative Rotation dieser beiden Elemente im wesentlichen verhindert. So kann das Dämpfungselement als separate Baugruppe hergestellt werden, und anschließend mit Rohr und/oder weiterem Rohr respektive Handgriff zusammengesetzt werden.

Weiterhin besteht bevorzugtermassen die Stange wenigstens im in die Befestigungshülse eingreifenden Bereich aus Metall oder einem Kunststoffmaterial. Tatsächlich sind derartige Stangen bei Dämpfungsvorrichtungen des Standes der Technik konventioneller Weise stets aus Metall gefertigt, da immer davon ausgegangen wurde, dass die entsprechenden axialen und Torsions-Kräfte nur von solchen Materialien aufgefangen werden können. Zudem waren derartige Stangen konventioneller Weise aus Metall gefertigt, da die bekannten Dämpfungsvorrichtungen des Standes der Technik jeweils als Befestigungselement ein Spreizelement einer verstellbaren Klemmvorrichtung aufweisen, und bei diesen ist es erforderlich, dass der oberste Bereich der Stange ein Außengewinde aufweist. Solche Außengewinde lassen sich, damit die erforderliche Leichtgängigkeit des Verstellmechanismus' gegeben ist, so gut wie nur aus metallischen Materialien herstellen. Wie die vorliegende Erfindung zeigt, ist dies aber keineswegs erforderlich, und tatsächlich ist es möglich, die Stange aus einem typischerweise thermoplastischen Kunststoffmaterial herzustellen, woraus sich dann herstellungstechnische Vorteile ergeben, aber auch gleichzeitig das Gewicht der Dämpfungsvorrichtung wesentlich reduziert werden kann.

Eine erste bevorzugte Ausführungsform der erfindungsgemäßen Dämpfungsvorrichtung ist dadurch gekennzeichnet, dass es sich beim Führungselement um wenigstens einen, bevorzugt zwei gegenüber angeordnete axial verlaufende, in beide axiale Richtungen begrenzte Schlitze in der zylindrischen Seitenwand (typischerweise die Außenwand) des freiliegenden Bereiches der Befestigungshülse handelt, in welcher ein senkrecht zur Achse der Dämpfungsvorrichtung verlaufender Querstift, der an der Stange befestigt ist, oder durch diese durch eine Durchgangsöffnung quer hindurch geführt.

Alternativ kann es sich beim Führungselement um wenigstens einen axial verlaufenden, in beide axiale Richtungen begrenzten länglichen Schlitz in der Stange handeln, in welchem ein senkrecht zur Achse der Dämpfungsvorrichtung verlaufender Querstift, der in der zylindrischen Seitenwand des freiliegenden Bereiches der Befestigungshülse befestigt ist (beispielsweise indem der Querstift an seinen beiden Enden im entsprechenden Wandungsabschnitt der Befestigungshülse respektive dem freiliegenden Bereich derselben befestigt ist), gefangen ist.

Der genannte Schlitz hat typischerweise eine axiale Länge im Bereich von 0.5-2 cm, vorzugsweise im Bereich von 0.7-1.5 cm.

Der Schlitz hat vorzugsweise zudem vorzugsweise eine Breite im Bereich von 1-3 mm, vorzugsweise im Bereich von 2 mm.

Das dem Befestigungselement zur Befestigung im Stockgriff oder am Außenrohr zugewandte Ende des Schlitzes kann dabei gemäß einer bevorzugten Ausführungsform ein Dämpfungselement aufweisen. Tatsächlich ist es so, dass, wenn der Querstift in der maximal entspannten Situation an den Anschlag kommt, dies wegen der Unterstützung durch die Federung mit erheblicher Kraft und Impuls erfolgt. Dies führt zu einem harten Anschlag und zu entsprechenden Geräuschen. Diese Wirkung kann abgefangen werden, indem das dem Befestigungselement zugewandte Ende des Schlitzes mit einer Dämpfung ausgestattet wird. Ebenfalls möglich ist es, den Querstift mit einer entsprechenden Dämpfung zu versehen. Das gleiche, d.h. eine Dämpfung des unteren Anschlages des Schlitzes, ist mit dem dem Befestigungselement abgewandten Ende des Schlitzes möglich, wenn auch dort typischerweise diese Probleme nicht gleichermaßen auftreten.

Ganz besonders einfach lässt sich eine solche Dämpfung realisieren, indem im freiliegenden Bereich der Befestigungshülse eine aussenseitige umlaufende Nut vorgesehen wird, welche auf der Höhe des dem Befestigungselement zugewandten Endes des Schlitzes liegt, und damit beim oberen Anschlag für den im Schlitz laufenden Querstift liegt. In diese Nut kann nun ein Dämpfungselement eingelegt werden, beispielsweise ein Gummiring oder ein O-Ring. Kommt nun der Querstift an den oberen Anschlag im Schlitz, so schlägt er dort nicht auf das harte Ende des Schlitzes, sondern auf dieses Dämpfungselement. Es kann sich dabei um eine relativ schmales ringförmiges Dämpfungselement mit einer Ausdehnung in axialer Richtung im Bereich von 0.5-2 mm handeln.

Der Querstift besteht dabei typischerweise aus Metall, kann aber auch aus Hartkunststoff bestehen. Er kann durchgängig ausgebildet sein, es kann sich aber auch um einen oder zwei gegenüberliegende im entsprechenden Bauteil befestigte Stümpfe handeln.

Der Querstift verfügt vorzugsweise über kreisrunden, rechteckigen oder quadratischen Querschnitt. Weiterhin bevorzugtermassen verfügt er über einen Durchmesser respektive eine Breite, welche gerade etwas geringer ist als die Breite des Führungsschlitzes.

Eine weitere bevorzugte Ausführungsform ist dadurch gekennzeichnet, dass das Befestigungselement für die Befestigung beispielsweise an einem Stockgriff über eine Hülse verfügt, welche wenigstens teilweise aussenseitig um die Befestigungshülse herumgreift und welche auf deren Außenseite in deren freiliegendem Bereich führend gleitet, wenn der Mechanismus komprimiert wird. So kann eine weitergehende Führung der beiden beweglichen Elemente relativ zueinander sichergestellt werden und zudem kann die axiale Länge der Befestigung des Befestigungselemente es am Außenrohr respektive am Stockgriff vergrößert werden. Der frei liegende Bereich liegt also dann nur noch im entspannten Zustand wirklich vollständig frei, während im vollständig komprimierten Zustand typischerweise nur noch ein Flansch freiliegt, welche dazu dient, einen Anschlag für die Einführung der Befestigungshülse im Innenrohr zur Verfügung zu stellen. Des weiteren kann bei dieser Bauweise die Stange relativ einfach aus Metall gefertigt sein und diese Hülse aus einem Kunststoff, so dass eine optimale Materialkombination ermöglicht wird.

Eine ganz besonders bevorzugte Ausführungsform der erfindungsgemäßen Dämpfungsvorrichtung zeichnet sich dadurch aus, dass das Befestigungselement und der frei liegende Bereich der Befestigungshülse in axialer Richtung wenigstens teilweise ineinandergreifend verschieblich ausgebildet sind, so dass sich eine in axialer Richtung extrem kompakte Bauweise realisieren lässt, was insbesondere bei einer Lagerung im Stockgriff von großem Vorteil ist. Diese bevorzugte Ausführungsform ist entsprechend konkret dadurch gekennzeichnet, dass das Befestigungselement und der frei liegende Bereich wenigstens dann, wenn die Dämpfungsvorrichtung im gespannten Zustand ist (bevorzugtermassen aber auch noch in einem geringen Maße wenn die Dämpfungsvorrichtung im entspannten Zustand ist) und Befestigungshülse und Befestigungselement maximal angenähert sind, wenigstens teilweise ineinandergreifen. Dabei und zu diesem Zweck verfügen vorzugsweise der frei liegende Bereich und das Befestigungselement über korrespondierende axial verlaufende längliche, schlitzartige Führungsausnehmungen und durch diese gebildete, umfangsmäßig dazwischen liegende, jeweils die radiale Außenwand bildende axiale, stegartige oder stabartige respektive rippen- oder kammförmige Führungsbereiche. Die Führungsausnehmungen des Befestigungselementes sind dabei so ausgestaltet, dass sie in verschieblichen Eingriff mit den axialen Führungsbereichen des freiliegenden Bereiches und die Führungsausnehmungen des freiliegenden Bereiches in verschieblichen Eingriff mit den axialen Führungsbereichen des Befestigungselementes kommen. Dabei gleiten die Seitenwände der entsprechenden Elemente aneinander. So sind beispielsweise, in einem Querschnitt betrachtet, diese axialen Führungsbereiche beim Befestigungselement in Form von beispielsweise vier, jeweils sich nur über einen gewissen Winkelabschnitt erstreckende, sich von einem geschlossenen Kopfbereich des Befestigungselementes nach unten erstreckende axiale Finger (Führungsbereiche) ausgebildet, welche in entsprechende axiale Nuten (Führungsausnehmungen) im freiliegenden Bereich gleitend eingreifen. Vorzugsweise ist dabei die axiale Länge der Führungsausnehmungen im wesentlichen gleich wie die Länge der Führungsbereiche, so dass im wesentlichen bei vollständig zusammen geschobener (gespannter) Dämpfungsvorrichtung eine geschlossene zylindrischen Umfangsfläche gebildet wird durch den ineinandergeschobenen freiliegenden Bereich und das Befestigungselement.

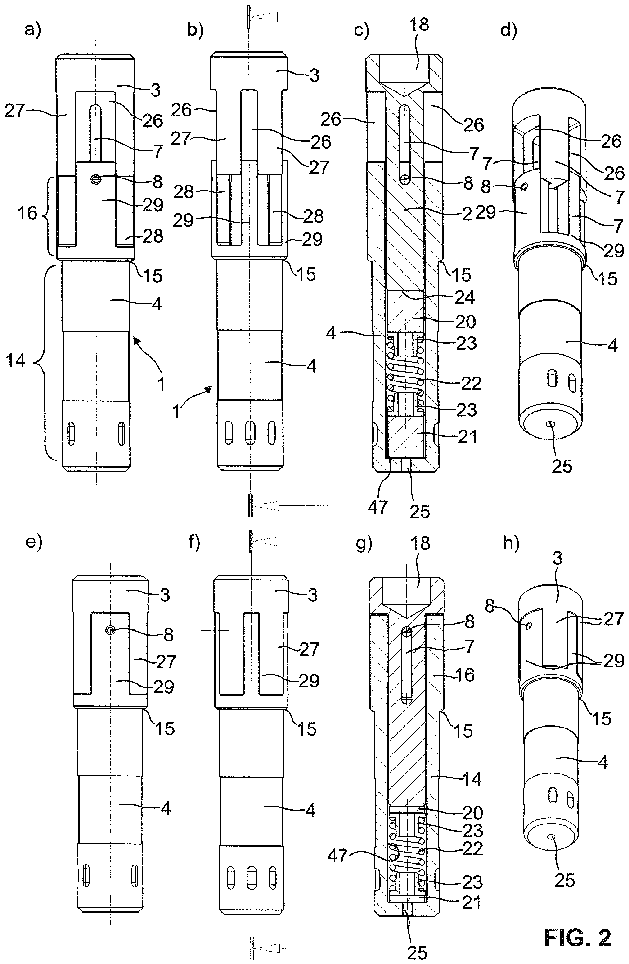

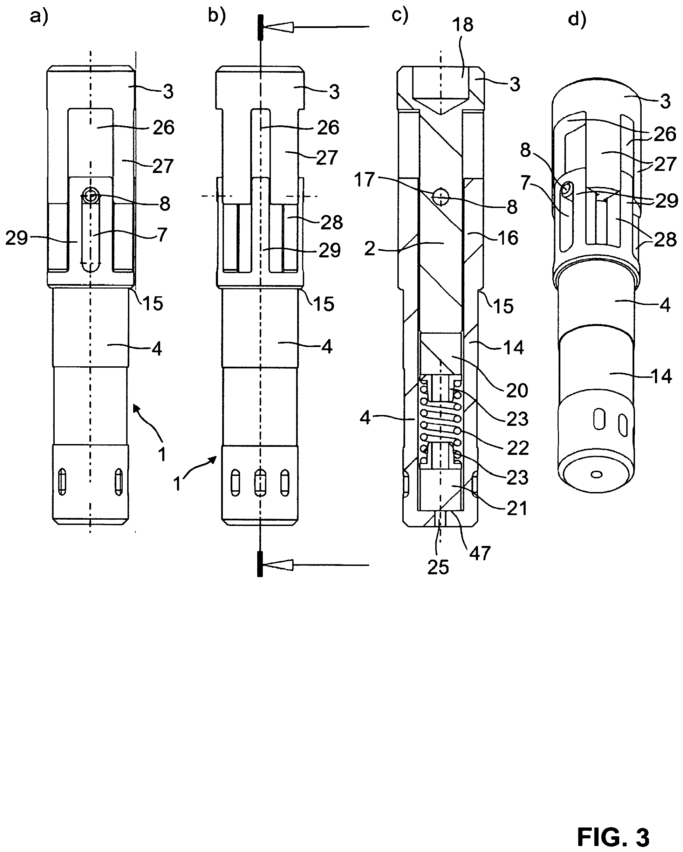

Die Führungsausnehmungen respektive die Führungsbereiche verfügen typischerweise über eine axiale Länge im Bereich von 0.5-2 cm, vorzugsweise im Bereich von 0.7-1.5 cm. Der frei liegende Bereich und das Befestigungselement weisen bevorzugtermassen jeweils wenigstens 2 axiale Führungsbereiche und zwei axiale Führungsausnehmungen auf, vorzugsweise beide davon wenigstens 3, insbesondere vorzugsweise beide davon wenigstens 4, wie im obigen Beispiel erläutert und auch in den Figuren 2 und 3 dargestellt. Dabei verfügen bevorzugtermassen diese Bereiche über eine axiale Länge, welche wenigstens 50 %, vorzugsweise wenigstens 75 %, insbesondere bevorzugt wenigstens 80 % der gesamten axialen Länge des Befestigungselementes und/oder des freiliegenden Bereiches ausmacht, das heißt vorzugsweise greifen Befestigungselement und frei liegender Bereich bei zusammen geschobener Dämpfungsvorrichtung wesentlich ineinander.

Eine weitere bevorzugte Ausführungsform ist dadurch gekennzeichnet, dass das dem Boden zugewandte Ende der Stange in direktem Kontakt mit dem Federelement steht, vorzugsweise mit einer Elastomerfeder, die entweder das Federelement als Ganzes bildet oder Bestandteil einer Federkomponente davon ist.

Bevorzugtermassen handelt es sich beim Federelement um einen Aufbau, bei welchem zwischen dem Boden und dem genannten Ende eine serielle Anordnung von Federelementen mit wenigstens einer Elastomerfeder und einer Spiralfeder vorhanden sind. Insbesondere vorzugsweise handelt es sich um eine serielle Anordnung bestehend aus der folgenden Folge von Elementen: erste Elastomerfeder in direktem Kontakt mit dem Ende der Stange gefolgt in Richtung zum Boden von einer Spiralfeder gefolgt zum Boden von wenigstens einer weiteren Elastomerfeder, die ihrerseits mit der Unterseite auf dem Boden aufliegt. Diese Federelemente verfügen vorzugsweise über einen Durchmesser, welcher nur unwesentlich geringer ist als der Innendurchmesser der Ausnehmung in der Befestigungshülse, aber im Fall der Elastomerfeder genügend geringer, damit die erforderliche Federungswirkung sichergestellt ist. Im Übergangsbereich zwischen Elastomerfeder und Spiralfeder können dabei Führungselemente vorgesehen sein, welche wenigstens teilweise in axialer Richtung in den Innenraum der Spiralfeder eingreifen und auf der anderen Seite eine Auflagefläche für die Elastomerfeder zur Verfügung stellen. Vorzugsweise ist zwischen Elastomerfeder und dem Ende der Stange kein weiteres Element angeordnet, gerade weil die Stange aus Kunststoff gefertigt ist, kann dieses Ende der Stange ohne weiteres als direkte Auflagefläche für die Elastomerfeder dienen, was herstellungstechnisch und gewichtsmäßig eine weitere Verbesserung mit sich bringt. Bei der Elastomerfeder kann es sich beispielsweise um ein Polyurethan-Federelement in Form eines Schaumelementes handeln, typischerweise mit einer axialen Höhe im Bereich von 5-15 mm und einem Durchmesser, der nur unwesentlich geringer ist als der Innendurchmesser des Sackloches in der Ausnehmung in der Befestigungshülse.

Eine noch weitergehende Torsionsstabilität kann erreicht werden, indem die Stange wenigstens in jenem Abschnitt, welcher durch eine entsprechende korrespondierende axiale, mit analogem nicht-kreisförmigem Querschnitt ausgebildete Öffnung im freiliegenden Bereich geführt ist, einen nicht-kreisförmigen Querschnitt, vorzugsweise einen rechteckigen oder quadratischen Querschnitt aufweist. Insbesondere wenn das Befestigungselement als verstellbares Klemmelement ausgebildet ist, und große Drehmomente beim Lösen der Verstellung ausgeübt werden, können so diese Torsionskräfte die ansonsten vollständig beispielsweise von oben erwähnten Querstift aufgefangen werden müssten, besser aufgenommen werden.

Erfindungsgemäss handelt es sich beim Befestigungselement um eine verstellbare Spreizvorrichtung, mit welcher der erste Rohrabschnitt lösbar respektive verstellbar im Stockgriff oder einem zweiten Rohrabschnitt mit größerem Innendurchmesser befestigbar ist.

Dabei handelt es sich vorzugsweise um eine Spreizvorrichtung, welche auf einer drehfest auf respektive in der Stange befestigten Schraube wenigstens in Bestandteilen drehbar vorgesehen ist.

Weiterhin bevorzugtermassen umfasst die Spreizvorrichtung ein auf der Schraube über ein Innengewinde drehbar gelagertes Innenelement mit einem einzigen, sich zur Dämpfungsvorrichtung aufweitenden Außenkonus und ein dieses Innenelement in einem Innenraum aufnehmendes Spreizelement mit einem entsprechenden, sich zur Dämpfungsvorrichtung hin aufweitenden Innenkonus mit im wesentlichen gleicher Steigung wie der Außenkonus und angepasst dazu. Dabei ist das Spreizelement entlang der axialen Richtung ohne Drehbewegung im Rahmen eines geringen Spiels (typischerweise im Bereich von 0.1-5 mm, vorzugsweise im Bereich von 0.3-3 mm) zwischen einem unteren axialen Anschlag und einem oberen Anschlag beweglich.

Weiterhin bevorzugtermassen verfügt das Spreizelement über wenigstens einen axialen Schlitz, in welchen am Innenelement angeformte Flügel wenigstens teilweise in axialer Richtung verschieblich eingreifen. Vorzugsweise gibt es dabei im Spreizelement zwei derartige Schlitze, einen axial vollständig durchgängigen Schlitz und einen in einem Schulterbereich unterbrochenen Schlitz auf der gegenüberliegenden Seite. So kann dieses Spreizelement gewissermassen aufgeklappt werden, wobei der nicht durchgängige Schlitz im nicht durchgängigen Bereich gewissermaßen als Scharnier wirkt.

Mit anderen Worten sitzt bei einer solchen Dämpfungsvorrichtung vorzugsweise die Spreizvorrichtung auf einer drehfest auf der Stange befestigten Schraube mit Außengewinde. Eine solche Schraube ist bevorzugtermassen aus einem metallischen Material gefertigt und hat ein Außengewinde in jenem Bereich, wo das Innenelement drehbar gelagert ist. Bevorzugtermassen ist nun eine solche Schraube in einem für diese Schraube in der Stange vorgesehenen axialen Sackloch in der Stange eingelassen und befestigt (beispielsweise eingeklebt oder eingespritzt).

Generell verfügt eine solche Schraube vorzugsweise am der Befestigungshülse gegenüberliegenden Ende über ein oberes Anschlagselement für ein Spreizelement, vorzugsweise in Form eines Schraubenkopfes, und insbesondere vorzugsweise verfügt auf der anderen Seite die Stange am der Schraube zugewandten freien Ende über einen umlaufenden, vorzugsweise einstückig mit der Stange ausgebildeten Flansch, vorzugsweise als unteres Anschlagselement für ein Spreizelement der Spreizvorrichtung. Bevorzugtermassen besteht die Stange aus einem thermoplastischen Kunststoffmaterial ausgewählt aus der Gruppe: Polyamid, Polyester, Polycarbonat, Polyethylen, Polypropylen oder einer Kombination/Blends davon, gegebenenfalls in faserverstärkter Form (beispielsweise Glasfasern, Kohlefasern etc., auch partikelförmige Füllstoffe sind möglich), wobei es sich vorzugsweise um Polyamid handelt.

Die Befestigungshülse ist bevorzugtermassen einstückig ausgebildet und besteht aus einem thermoplastischen Kunststoffmaterial ausgewählt aus der Gruppe: Polyamid, Polyester, Polycarbonat, Polyethylen, Polypropylen oder einer Kombination/Blends davon, gegebenenfalls in faserverstärkter Form (beispielsweise Glasfasern, Kohlefasern etc., auch partikelförmige Füllstoffe sind möglich), wobei es sich vorzugsweise um Polyamid handelt.

Befestigungshülse und/oder Befestigungselement können aber auch aus Metall beispielsweise aus Leichmetall wie Aluminium oder aus einer Aluminiumlegierung (z.B. Al/Mg Legierung) bestehen oder eine entsprechende Beschichtung oder Hülse für den Kontakt mit dem Rohr aufweisen.

Das Befestigungselement verfügt vorzugsweise über eine axiale Länge im Bereich von 1-4 cm, vorzugsweise im Bereich von 1.5-3 cm.

Der frei liegende Bereich verfügt bevorzugtermassen über eine axiale Länge im Bereich von 0.5-4 cm, vorzugsweise im Bereich von 1.5-3 cm.

Der Befestigungsabschnitt seinerseits verfügt bevorzugtermassen über eine axiale Länge im Bereich von 2-10 cm, vorzugsweise im Bereich von 4-7 cm.

Normalerweise und bevorzugtermassen ist der Boden der Ausnehmung im Befestigungselement für die Stange respektive das Federungselement geschlossen ausgebildet. Er kann aber auch eine zentrale axiale Öffnung aufweisen, solange immer noch eine genügende Auflagefläche für das Federelement zur Verfügung gestellt wird.

Entsprechend sollte eine solche zentrale axiale Öffnung einen Durchmesser aufweisen, welcher wesentlich geringer ist als der Innendurchmesser der Ausnehmung, so beispielsweise nur einen Durchmesser von weniger als 2 mm, vorzugsweise von weniger als 1 mm aufweisen.

Bevorzugtermassen sind die Stange und das Befestigungselement einstückig ausgebildet, und das Befestigungselement ist im Stockgriff respektive im ersten Rohrabschnitt durch eine Verbindung als Formschluss, und/oder Kraftschluss und/oder Stoffschluss fest befestigt.

Des weiteren betrifft die vorliegende Erfindung einen Trekking-, Ski-, Wander-, oder Nordic-Walking-Stock mit einer Dämpfungsvorrichtung wie oben beschrieben, wobei der Stock einen Stockgriff aufweist mit einer axialen Ausnehmung zur Befestigung eines Stockrohres und wobei die Dämpfungsvorrichtung in dieser axialen Ausnehmung im griffkopfnahen Bereich mit dem Befestigungselement befestigt ist, und das Stockrohr mit seinem oberen freien Ende die Befestigungshülse im Befestigungsabschnitt (umschliessend) befestigt ist (beispielsweise Kraftschluss und/oder Stoffschluss wie zum Beispiel kleben).

Zudem betrifft die vorliegende Erfindung einen Trekking-, Ski-, Wander-, oder Nordic-Walking-Stock mit einer Dämpfungsvorrichtung wie oben beschrieben, wobei der Stock wenigstens zwei oder drei axial verschieblich zueinander angeordnete Rohrabschnitte aufweist, und wobei die Dämpfungsvorrichtung in einem ersten Rohrabschnitt mit geringerem (Außen) Durchmesser über den Befestigungsabschnitt befestigt ist und in einem zweiten Rohrabschnitt mit größerem (Innen) Durchmesser über das Befestigungselement, welches vorzugsweise als lösbare Spreizvorrichtung ausgebildet ist, befestigt ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

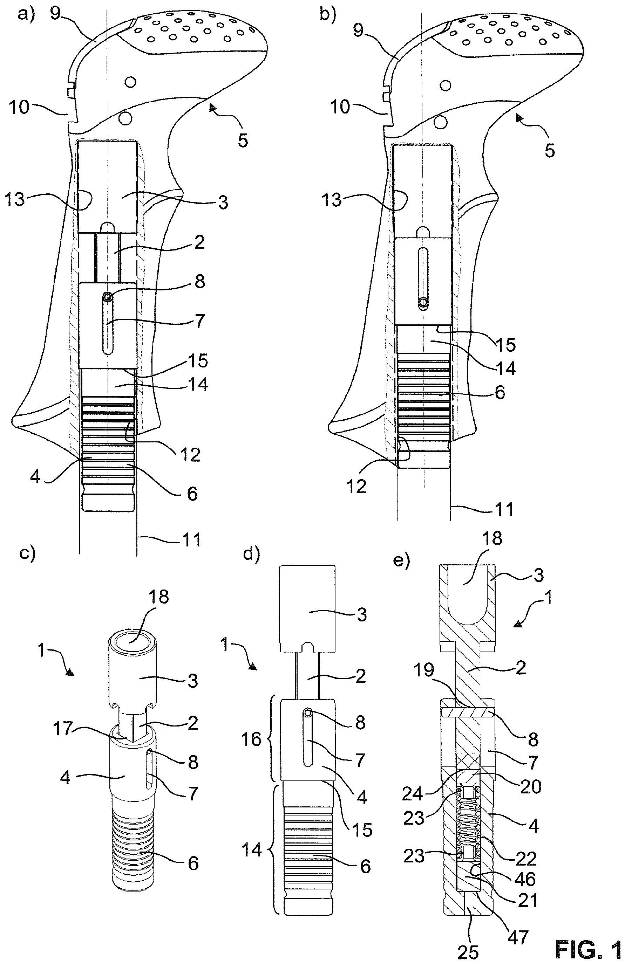

- Fig. 1: ein erstes Ausführungsbeispiel einer Dämpfungsvorrichtung in unterschiedlichen Ansichten, so in a) in einem Stockgriff im entspannten Zustand, in b) in einem Stockgriff im gespannten Zustand; in c) in einer perspektivischen Ansicht, in d) in einer Seitenansicht in einer Sicht entlang der Verlaufsrichtung des Führungsstiftes; und in e) in einem axialen Schnitt in einer Ebene durch den Führungsstift;
- Fig. 2: ein zweites Ausführungsbeispiel einer Dämpfungsvorrichtung in unterschiedlichen Ansichten, so in a)-d) im entspannten Zustand, wobei in a) eine Seitenansicht in einer Sicht entlang der Verlaufsrichtung des Führungsstiftes, in b) eine Seitenansicht in einer Sicht senkrecht zur Verlaufsrichtung des Führungsstiftes, in c) ein axialer Schnitt senkrecht zur Verlaufsrichtung des Führungsstiftes, und in d) eine perspektivische Ansicht dargestellt sind, und in e)-h) im gespannten Zustand, wobei in e) eine Seitenansicht in einer Sicht entlang der Verlaufsrichtung des Führungsstiftes, in f) eine Seitenansicht in einer Sicht senkrecht zur Verlaufsrichtung des Führungsstiftes, in g) ein axialer Schnitt senkrecht zur Verlaufsrichtung des Führungsstiftes, und in h) eine perspektivische Ansicht dargestellt sind;
- Fig. 3: ein drittes Ausführungsbeispiel einer Dämpfungsvorrichtung in unterschiedlichen Ansichten im entspannten Zustand, so in a) eine Seitenansicht in einer Sicht entlang der Verlaufsrichtung des Führungsstiftes, in b) eine Seitenansicht in einer Sicht senkrecht zur Verlaufsrichtung des Führungsstiftes, in c) ein axialer Schnitt senkrecht zur Verlaufsrichtung des Führungsstiftes, und in d) eine perspektivische Ansicht;

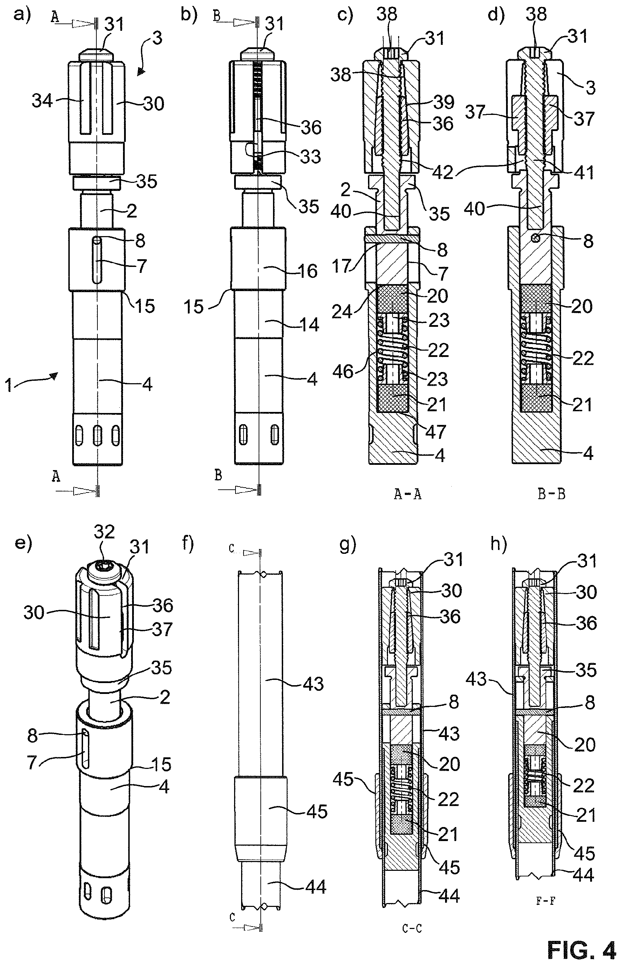

- Fig. 4: ein viertes Ausführungsbeispiel einer Dämpfungsvorrichtung mit verstellbarem Klemmelement, wobei in a) eine seitliche Ansicht, in b) eine weitere seitliche Ansicht um 90° verdreht zu Ansicht a), in c) ein Schnitt entlang der Linie A-A in Figur a), in d) ein Schnitt entlang der Linie B-B in Figur b) dargestellt sind, sowie in e) eine perspektivische Ansicht, und in f) eine Außenansicht auf ein verstellbares Rohr im Übergangsabschnitt mit einer solchen Dämpfungsvorrichtung, in g) ein axialer Schnitt durch einen solchen Übergangsabschnitt im entspannten Zustand und in h) ein axialer Schnitt durch einen solchen Übergangsabschnitt im gespannten Zustand;
- Fig, 5: ein fünftes Ausführungsbeispiel einer Dämpfungsvorrichtung mit verstellbarem Klemmelement, wobei in a) eine seitliche Ansicht, in b) eine weitere seitliche Ansicht um 90° verdreht zu Ansicht a), in c) ein Schnitt entlang der Linie A-A in Figur a), in d) ein Schnitt entlang der Linie B-B in Figur b) dargestellt sind; und

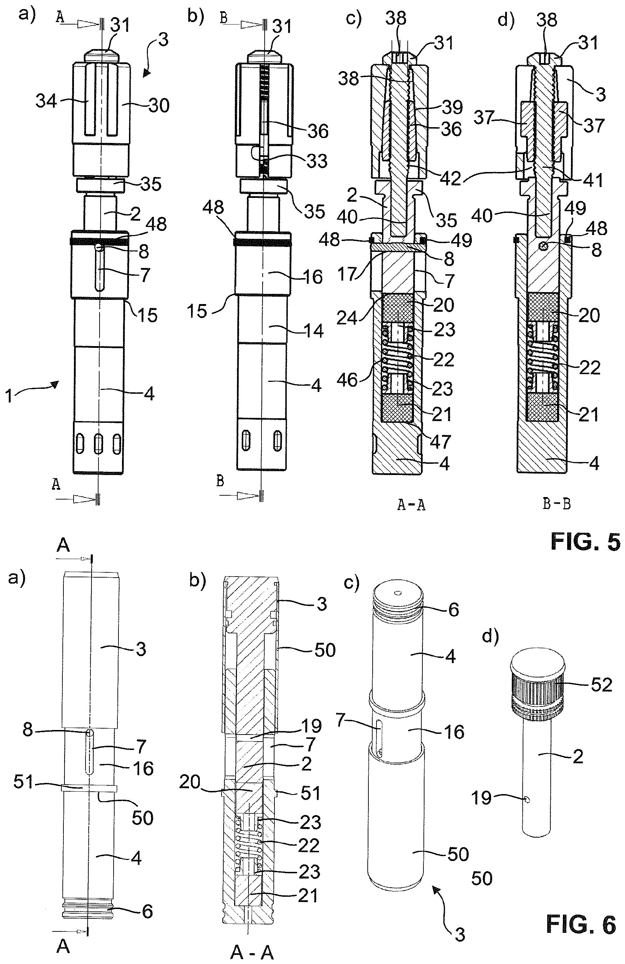

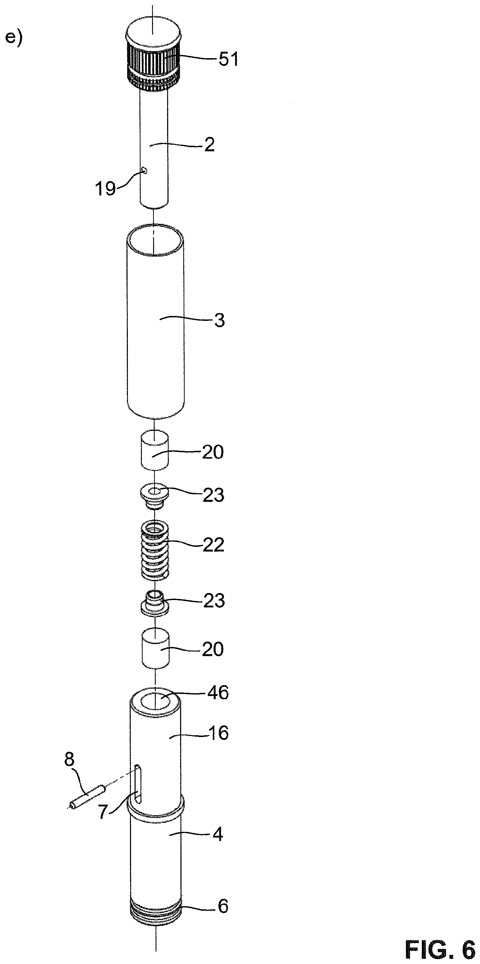

- Fig. 6: ein sechstes Ausführungsbeispiel einer Dämpfungsvorrichtung, wobei in a) eine seitliche Ansicht, in b) ein Schnitt entlang der Linie A-A aus Figur a), in c) eine perspektivische Ansicht von unten, in d) eine perspektivische Ansicht des Elementes mit der Stange ohne Hülse, und in e) eine Explosionsansicht dargestellt sind.

### BESCHREIBUNG BEVORZUGTER AUSFÜHRUNGSFORMEN

Figur 1 zeigt eine Dämpfungsvorrichtung 1 nach einem ersten Ausführungsbeispiel. Es handelt sich hierbei um eine Dämpfungsvorrichtung, welche über ein Befestigungselement 3 verfügt, das fix befestigt wird, d.h. es handelt sich nicht um eine Spreizklemmung oder ähnliches zur variablen Verstellbarkeit. Eine solche Dämpfungsvorrichtung kann beispielsweise, wie in den Figuren 1a resp. b im entspannten resp. gespannten (vollständig zusammen geschobenen) Zustand dargestellt, im Stockgriff angeordnet werden. Solche Dämpfungsvorrichtungen, die im wesentlichen vollständig in möglichst kompakter Form in einem Stockgriff angeordnet werden können, sind insbesondere dann von grossem Vorteil, wenn entweder der Stock als ganzes nicht teleskopisch verstellbar ausgestaltet ist oder teleskopisch verstellbar aus mehreren Rohrabschnitten, die ineinander geschoben werden können, ausgebildet ist, die Festlegung der axialen relativen Position dieser Rohrabschnitte aber beispielsweise durch aussenliegende Klemmmechanismen realisiert ist, die keine Federung zulassen.

Der hier dargestellte Stockgriff 5 verfügt entsprechend über eine im wesentlichen axiale von unten in Form eines Sackloches ausgebildete Ausnehmung 12, welche einen kreisrunden Querschnitt aufweist und sich möglichst weit nach oben in den Stockgriff erstreckt. Im Kopfbereich verfügt der Stockgriff über eine Klemmvorrichtung 9 für eine Handschlaufe, diese wird dabei typischerweise durch eine Ausnehmung 10 im Kopfgriff durchgeführt und durch eine Klappe oder eine andersartige Klemmung in unterschiedlichen Positionen resp. Längeneinstellungen geklemmt.

Die Dämpfungsvorrichtung verfügt, wie dies insbesondere in den Ansichten gemäss den Figuren 1c und d erkannt werden kann, über eine Befestigungshülse, welche im unteren Bereich einen Befestigungsabschnitt 14 aufweist. Dieser Befestigungsabschnitt 14 geht nach oben hin über in einen freiliegenden Bereich 16 mit etwas grösserem Durchmesser, so dass sich zwischen den Abschnitten 14 und 16 ein umlaufender Absatz 15 ausbildet. Das Stockrohr 11 wird auf den Befestigungsabschnitt 14 von unten aufgeschoben und in Anschlag mit dem Absatz 15 gebracht, und in dieser Position befestigt. Dazu verfügt das Stockrohr 11 im Wesentlichen über einen Innendurchmesser, der dem Aussendurchmesser des Abschnittes 14 entspricht. Zur verbesserten Befestigung kann der Befestigungsabschnitt 14 über eine gerippte Oberfläche 6 verfügen sowie über gegebenenfalls spezielle Einschnürungen oder ähnliches. Das Stockrohr 11 wird an diesem Befestigungsabschnitt typischerweise festgeklemmt und/oder festgeklebt.

Ist die Befestigungshülse 4 so im Stockrohr befestigt, so ragt die Befestigungshülse 4 mit dem freiliegenden Bereich 16 über das freie Ende des Stockrohres 11 hinaus. In diesem freiliegenden Bereich 16 ist in der zylindrischen Aussenwandung dieses Bereichs ein länglicher axialer Schlitz 7 vorgesehen. In diesem axialen Schlitz ist ein Führungsstift 8 in Form eines typischerweise aus Metall gefertigten Querstiftes 8 gefangen. Dieser Querstift 8 ist in einer Durchgangsöffnung 19 einer Stange 2, welche einstückig mit dem Befestigungselement 3 ausgebildet ist, befestigt und erstreckt sich seitlich in beide Richtungen über die Breite der Stange 2 hinaus, wie dies insbesondere im axialen Schnitt gemäss Figur 1e erkannt werden kann.

Tatsächlich verfügt die Befestigungshülse über ein von oben sich in diese erstreckendes Sackloch mit einem Boden 47, d.h. es gibt einen Innenraum 46 mit einer zylindrischen Aussenwand im unteren Bereich 14, übergehend in einen Bereich mit quadratischer Querschnittsfläche im Bereich 16. Am Boden 47 dieser Ausnehmung 46 kann dabei eine kleine axiale Öffnung 25 vorgesehen sein.

In dieser axialen Öffnung 46 läuft nun die genannte Stange 2 in axial verschieblicher Weise, wobei die axiale Beweglichkeit der Stange 2 eingeschränkt ist durch das Spiel innerhalb des Schlitzes 7, welches dem Führungsstift 8 erlaubt ist. Entsprechend ist der vollständig entspannte Zustand wie in Figur 1e dargestellt durch eine obere Position definiert, bei welcher der Querstift 8 in Anschlag mit der oberen Abschlussfläche des Schlitzes 7 kommt. Auf der anderen Seite ist der untere Anschlag des gespannten Zustandes (vgl. Figur 1b) in der Regel dadurch definiert, dass in diesem Zustand die Unterkante des Befestigungselements in Anschlag kommt mit der Oberkante des Bereiches 16, es ist aber auch möglich, dass diese Anschlagsposition durch einen Anschlag des Querstiftes 8 am unteren Ende des Führungsschlitzes 7 gegeben wird.

Die Stange 2 ist dabei nur im oberen Bereich der Ausnehmung 46 angeordnet, da im unteren Bereich ein Federelement angeordnet ist. Bei diesem Federelement handelt es sich um eine Sequenz aufgebaut auf einer Elastomerfeder 20, die in direktem Kontakt mit der unteren Auflagefläche, d.h. dem unteren Ende 24 der Stange 2 ist, gefolgt von einer Spiralfeder 22, wiederum gefolgt am unteren Ende von einer zweiten Elastomerfeder 21, die in Kontakt mit dem Boden 47 steht.

Eine solche Sequenz von Federelementen führt dazu, dass einerseits eine sehr gute Federung zur Verfügung gestellt wird, andererseits aber keine zu hohe Elastizität, d.h. kein zu hohes Zurückspringen beim Aufschlagen auf den Boden, gewährleistet ist. D.h. es ergibt sich so eine Federung mit grossem Federweg aber geringem Rückschlag, d.h. mit grosser Dämpfung. Um für die Spiralfeder eine klar definierte Auflagefläche auf den Elastomerfedern zur Verfügung zu stellen, gibt es Zwischenelemente 23, welche mit einem umlaufenden Flansch in das Innere der Spiralfeder über einen gewissen axialen Abschnitt eingreifen und auf der der jeweiligen Elastomerfeder zugewandten Seite über ein flächiges Element verfügen.

In diesem Fall ist die Stange 2, bestehend aus einem Kunststoffmaterial, nicht zylindrisch ausgebildet, sondern verfügt über einen quadratischen Querschnitt. Dieser quadratische Querschnitt greift durch eine ebenfalls quadratische Durchtrittsöffnung 17 im freiliegenden Bereich 16 und wird entsprechend durch diese Durchtrittsöffnung 17 geführt. Einerseits durch die Anordnung des Querstifts 8 im Führungsstift aber andererseits auch durch diese nicht-kreisförmige Ausgestaltung von Stange 2 und Durchtrittsöffnung 17 wird sichergestellt, dass Stange und Befestigungselement zwar in axialer Richtung verschieblich bezüglich Befestigungshülse gelagert sind, nicht aber gedreht werden können. Dies ist für die Stabilität der Konstruktion von grossem Vorteil, und erlaubt es insbesondere, in einer Abwandlung des Ausführungsbeispiels gemäss Figur 1, das Befestigungselement 3 nicht wie hier dargestellt als Befestigungselement mit einem oben freiliegenden Hohlraum 18 und dafür vorgesehen, beispielsweise im Handgriff im Befestigungsbereich 13 fest eingeklebt resp. eingeklemmt zu werden, sondern dieses Befestigungselement im Sinne einer Spreizvorrichtung, die gelöst werden kann indem eine Torsionskraft ausgeübt wird, auszubilden. Insbesondere wenn das Befestigungselement als derartige Klemmvorrichtung, wie sie im Zusammenhang mit Figur 4 weiter erläutert werden wird, ausgebildet ist, kann es wichtig sein, dass keine zu hohen Torsionskräfte auf den Führungsstift ausgeübt werden, da dieser sonst unter Umständen brechen kann resp. übermässig dimensioniert werden muss.

Ein zweites Ausführungsbeispiel der Dämpfungsvorrichtung nach der vorliegenden Erfindung ist in Figur 2 dargestellt. Es handelt sich hierbei um eine extrem kompakte Bauweise, wie sie insbesondere für die direkte Befestigung in einem Stockgriff besonders geeignet ist. Die relative Anordnung von Querstift 8 und Schlitz 7 ist hier gewissermassen im Vergleich zum Ausführungsbeispiel gemäss Figur 1 umgekehrt. Namentlich gibt es hier im Befestigungselement 3 resp. in der einstückig damit ausgebildeten Stange 2 einen Längsschlitz 7, und der Querstift 8 ist im freiliegenden Bereich 16 gelagert.

Generell bezeichnen gleiche Bezugszeichen dabei gleiche oder funktionsäquivalente Elemente, wie sie im Rahmen von Figur 1 bereits vorgestellt und diskutiert wurden.

Um eine möglichst kompakte Bauweise zu gewährleisten, wird bei diesem Ausführungsbeispiel so vorgegangen, dass das Befestigungselement 3, welches hier nicht als Spreizelement ausgebildet ist, und der freiliegende Bereich 16 insbesondere im vollständig gespannten Zustand (vgl. Figuren 2e-h) möglichst weit axial ineinandergreifen. Zu diesem Zweck verfügt das Befestigungselement 3 über vier um den Umfang verteilte axiale Führungsbereiche 27, die durch vier dazwischen angeordnete Führungsausnehmung 26 voneinander getrennt sind. Diese vier axialen Führungsbereiche 27 sind im Kopfbereich des Befestigungselementes 3, wo dieses umlaufend ausgebildet ist, miteinander verbunden. Sie sind auch untereinander verbunden durch die in der Mitte angeordnete und einstückig damit ausgebildete Stange 2. Die axialen Führungsbereiche 27 bilden dabei die in Kontakt mit dem Stockgriff oder einem Rohrabschnitt kommende zylindrische Aussenfläche des Befestigungselementes 3.

Korrespondierend dazu verfügt der freiliegende Bereich 16 über axiale Nuten resp. Führungsausnehmungen 28, deren Querschnittsfläche jener der axialen Führungsbereiche 27 des Befestigungselementes angepasst ist. Diese Führungsausnehmungen 28, von welchen wiederum vier um den Umfang verteilt angeordnet sind, werden Ihrerseits voneinander getrennt durch vier fingerartige, sich nach oben erstreckende axiale Führungsbereiche 29, die am oberen Ende nicht miteinander verbunden sind und entsprechend freie Enden haben. Zwischen zwei gegenüberliegenden derartigen freien Enden ist der Führungsstift 8 überbrückend befestigt.

Damit laufen die axialen Führungsbereiche 27 axial verschieblich in den axialen Führungsausnehmungen 28 und die axialen Führungsbereiche 29 laufen in axialer Richtung verschieblich in den Führungsausnehmungen 26. Selbst im vollständig entspannten Zustand (Figur 2a-d) greifen so Befestigungselement und freiliegender Bereich 16 noch etwas ineinander, dieser axiale Überlappungsbereich beträgt typischerweise wenigstens 2 mm, vorzugsweise im Bereich von 3-4 mm. Die axiale Länge der Elemente 26 und 27 ist dabei der axialen Länge der Elemente 29 resp. 28 angepasst, so dass bei vollständig gespanntem, d.h. ineinandergeschobenem Zustand wie in den Figuren 2e-h dargestellt Befestigungselement und freiliegender Bereich vollständig ineinandergreifend angeordnet und eine im wesentlichen geschlossene zylindrische Umfangsfläche bildend angeordnet sind, wobei aber die Umfangsfläche der Führungsbereiche 29 leicht radial nach innen versetzt sein sollten, damit diese reibungslos in Rohr verschieblich sind (axiale Beweglichkeit).

Der obere Anschlag für den entspannten Zustand wird bei diesem Ausführungsbeispiel durch den Anschlag des Querstiftes 8 am unteren Ende des Schlitzes 7 vorgegeben (vgl. insbesondere Figur 2c), und der Anschlag des vollständig gespannten, d.h. ineinandergeschobenen Zustandes wird vorgegeben durch den Anschlag der Elemente 26/29 resp. 27/28. Der untere Zustand kann aber auch alternativ oder zusätzlich durch den Anschlag des Querstiftes am oberen Ende des Schlitzes 7 gestellt werden, wie dies aus Figur 2g ersichtlich ist.

Dieses Ausführungsbeispiel ist nicht nur maximal kompakt, sondern kann auch besonders einfach montiert werden, weil der Querstift 8 in einem Bereich angeordnet ist, welcher über den Befestigungsbereich 14 oben hinausragt. Des Weiteren ist es möglich, bei einer solchen Bauweise auch eine vollständige Verriegelung der Federung ohne weiteres vorzusehen.

Ein etwas abgewandeltes Ausführungsbeispiel ähnlich zu jenen von Figur 2 ist in Figur 3 dargestellt. Hier ist aber hinsichtlich Schlitz 7 und Querstift 8 die Situation wieder ähnlich wie bei Figur 1, während ansonsten die Bauweise im Wesentlichen jener von Figur 2 entspricht.

Mit anderen Worten ist der Längsschlitz in axialer Richtung hier wiederum im freiliegenden Bereich 16 vorgesehen, und zwar in zwei gegenüberliegenden axialen Führungsbereichen 29, und der Querstift 8 ist in einer Durchgangsöffnung 17 in der Stange 2 gelagert. Entsprechend ist der obere Anschlag für den entspannten Zustand, wie in Figur 3 dargestellt, durch die oberste mögliche Position des Querstiftes 8 im Schlitz 7 gegeben. Ein viertes Ausführungsbeispiel einer Dämpfungsvorrichtung ist in Figur 4 dargestellt. Wiederum verfügt die Dämpfungsvorrichtung 1 über eine Befestigungshülse 4, welche einen Befestigungsabschnitt 14 aufweist mit geringerem Durchmesser, übergehend an einer umlaufenden Stufe 15 in einen freiliegenden Bereich 16 mit grösserem Durchmesser. Ein durchmesserkleineres Innenrohr 44 wird zur Befestigung einer solchen Dämpfungsvorrichtung über den Bereich 14 aufgeschoben bis zum Anschlag mit der Stufe 15 und dann in dieser Position befestigt.

Im einstückig mit dem Befestigungsabschnitt 14 ausgebildeten freiliegenden Bereich 16 gibt es in der zylindrischen Aussenwandung einen Längsschlitz 7, in welchem ein in einer axial verlaufenden Stange 2 in einer Durchtrittsöffnung 17 befestigter Querstift 8 gefangen ist. Der obere Anschlag für den entspannten Zustand wird dabei definiert durch das obere Ende des Schlitzes 7, wie dies in den Figuren 4a-d dargestellt ist. Die Stange 2 verfügt hier über einen kreisrunden Querschnitt und das Befestigungselement ist als Klemmelement zur lösbaren Befestigung in einem Aussenrohr 43 vorgesehen. Dieses Klemmelement verfügt dabei über ein Spreizelement 30, welches auf der Innenseite über einen Innenkonus 38 verfügt, welcher sich zum Innenrohr hin öffnet. In dem durch diesen Innenkonus gebildeten Innenraum ist ein auf einem Aussengewinde 42 einer Schraube 41 über ein Innengewinde gelagertes Innenelement 36 drehbar angeordnet. Dieses Innenelement 36 verfügt seinerseits über einen Aussenkonus 39 mit im Wesentlichen gleicher Steigung wie der oben genannte Innenkonus 38.

Dieses Innenelement 36 kann in axialer Richtung nur verschoben werden, wenn es sich relativ zur Schraube dreht. Im Gegensatz dazu ist das Spreizelement 30 in axialer Richtung leicht beweglich, d.h. mit einem gewissen Spiel zwischen einem Schraubenkopf 31 und einer umlaufenden Schulter 35 gefangen. Im Rahmen dieses Spiels kann das Spreizelement 30 in axialer Richtung ohne Drehung des selben hin und her bewegt werden.

Das Spreizelement 30 verfügt des weiteren auf der einen Seite über einen sich über die vollständige axiale Länge erstreckenden Längsschlitz 33 und auf der gegenüberliegenden Seite ist dieser Längsschlitz nicht durchgängig ausgeführt, wie dies insbesondere anhand von Figur 4d erkannt werden kann. In diese Längsschlitze 33 greifen kleine sich radial nach aussen erstreckende Flügel 37, die am Innenelement 36 angeformt sind, ein. Entsprechend kann sich das Innenelement 36 relativ zum Spreizelement 30 nicht verdrehen, sondern nur in axialer Richtung verschieben. Wird bei einer solchen Klemmvorrichtung durch Drehung der Schraube 41 das Innenelement 36 nach oben geschoben, so spreizen sich die seitlichen Backen des Spreizelements 30 auf und es erfolgt eine Klemmung an der Innenwand des Aussenrohres 43. Zur besseren Klemmung können dabei Vertiefungen 34 im Spreizelement 30 vorgesehen sein.

Damit eine solche Klemmvorrichtung gut funktioniert, muss das Innenelement 36 möglichst leichtgängig auf dem Aussengewinde 42 drehbar gelagert sein. Liegen hier zu grosse Reibungen vor, so dreht sich in Folge der grossen Torsion beim Versuch, den Klemmmechanismus festzulegen, das Spreizelement 30 mit und eine Klemmung kann nicht hergestellt werden. Entsprechend ist es wichtig, dass das Aussengewinde 42 hochpräzis und hochfest ist, weswegen die Schraube 41 typischerweise aus Metall bestehen muss. Es ist nun aber nicht nötig, dass deswegen auch die Stange 2 aus Metall gefertigt sein muss, konkret erweist es sich als grosser Vorteil, wenn diese Schraube 41 als separates metallisches Element ausgebildet ist, welches möglichst kurz ist und in einem Sackloch 40 in der Stange 2 beispielsweise durch Umspritzen orts- und drehfest befestigt ist. Dieses Sackloch 40 erstreckt sich dabei gerade so weit, dass es die Durchtrittsöffnung 17 für den Querstift 8 unberührt lässt. Entsprechend ist die Stange 2, die aus einem Kunststoffmaterial und damit wesentlich leichter und herstellungstechnisch besser verfügbar ist, so ausgebildet, dass sie gewissermassen im oberen Bereich eine Manschette für die Aufnahme der Schraube 41 sowie über den Flansch 35 einen Anschlag für die Spreizvorrichtung zur Verfügung stellt, im mittleren Bereich zur Befestigung des Querstifts dient und mit der unteren Abschlussfläche 24, die in die Befestigungshülse hineinragt, als Anschlag für das Federelement dient. Auch hier ist das Federelement als Serie aus Elastomerfeder 20, Spiralfeder 22 und gefolgt am Boden 47 der Ausnehmung 46 von einer weiteren Elastomerfeder 21 ausgebildet. Auch hier sind Führungselemente 23 bei der Übergängen von Spiralfeder 22 zur der entsprechenden Elastomerfeder 20 resp. 21 vorgesehen.

Figur 5 zeigt ein weiteres Ausführungsbeispiel, welches in den mit gleichen Bezugszeichen bezeichneten Elementen und deren Funktionsweise jenem entspricht, das in Figur 4 dargestellt und im Zusammenhang mit dieser Figur auch bereits ausführlich beschrieben worden ist. Dieses weitere Ausführungsbeispiel unterscheidet sich dabei von jenem aus Figur 4 insbesondere dadurch, dass der obere Anschlag des Querstifts 8, d.h. der Anschlag des Querstifts 8 im Führungsschlitz 7, der die entspannte Position begrenzt und dem Befestigungselement 3 zugewandt ist, über eine Dämpfung verfügt. Diese Dämpfung ist realisiert durch ein ringförmiges Dämpfungselement 48, welches in einer im Bereich 16 auf der entsprechenden axialen Höhe angeordneten umlaufenden Nut 49 angeordnet ist.

Die Nut liegt dabei im wesentlichen auf der Höhe des oberen Anschlages, der durch den Schlitz 7 gebildet wird, und verfügt über eine Breite resp. Tiefe, so dass das Dämpfungselement 48 im wesentlichen vollständig in dieser Nut eingelassen ist und nicht über die zylindrische Aussenfläche des Bereichs 16 unnötig hervorsteht. Der Schlitz 7 verfügt dabei immer noch über ein gewissermassen oberes Ende, dieses liegt aber so, dass der Querstift mit diesem oberen Ende nur in Kontakt kommen kann, wenn er das Dämpfungselement wenigstens teilweise oder sogar im wesentlichen vollständig gequetscht hat in der entsprechenden Umlaufsposition. Kommt also der Querstift bei einem Entspannen, dieses Entspannen ist typischerweise federunterstützt und entsprechend erfolgt es mit kräftigem Impuls), an den oberen Anschlag, so trifft er dort nicht auf die harte Anschlagskulisse des Schlitzes 7, sondern auf das Dämpfungselement 48, was dazu führt, dass einerseits kein hartes Auftreffen erfolgt, welches vom Benutzer unangenehm empfunden wird, andererseits aber auch keine lästigen Klickgeräusche entstehen. Es handelt sich dabei um eine äusserst einfache und fehlfunktionsresistente Bauweise, die zudem einfach zusammen gebaut werden kann (einfaches Überstülpen eines Gummiringes über den Bereich 16 und entspannendes Einschnappen in die Nut 49), die mit einfachen konstruktiven Massnahmen eine grosse Wirkung erzeugt.

Beim Dämpfungselement 48 kann es sich beispielsweise um einen O-Ring handeln mit entsprechendem Radius, in diesem Fall kann die Nut 49 als im unteren Bereich halbkreisförmig ausgebildete Nut gestaltet sein. Das Dämpfungselement 48 kann aber auch einen rechteckigen oder quadratischen Querschnitt aufweisen, so dass dann ein solches Element bevorzugtermassen in eine entsprechende rechteckige Nut 49 eingelegt werden kann.

Eine weitere bevorzugte Ausführungsform eines Dämpfungsmechanismus, insbesondere zur Befestigung in einem Stockgriff, ist in Figur 6 in unterschiedlichen Darstellungen angegeben. Auch hier bezeichnen gleiche Bezugszeichen gleiche oder wenigstens funktionsäquivalente Elemente wie beispielsweise in Figur 1. In diesem Fall verfügt der das Befestigungselement 3 über eine mehrteilige Bauweise. Auf der einen Seite gibt es das typischerweise aus Metall oder Kunststoff einstückig ausgebildete Element mit Stange 2 und einem Kopfelement 52 (vgl. insbesondere Figur 6d), wobei dieses Kopfelement im umlaufenden zylindrischen Bereich über eine axial verlaufende Zahnung verfügen kann.

An diesem befestigt ist eine kreisszylindrische Hülse 50, welche dann auch dazu dient, das Befestigungselement beispielsweise in der Ausnehmung des Stockgriffes zu befestigen. Diese Hülse 50 verfügt über eine erhebliche axiale Ausdehnung, und kommt mit seinem einen Ende in Anschlag mit einem umlaufenden Flansch am kopfseitigen Ende des Kopfelementes 52 und umgreift am anderen Ende den freiliegenden Bereich 16 derart, dass typischerweise der Schlitz 7 nur in der vollständig entspannten Position freiliegt (vgl. Figur 6a). Entsprechend ist auch die Befestigungshülse 4 so ausgebildet, dass sie als Absatz 15 für den Anschlag des Innenrohres (nicht dargestellt in Figur 6) einen umlaufenden Flansch 51 mit geringer axialer Höhe aufweist. Die Unterseite dieses Flansches dient dann als Anschlag 15, und die Oberseite, soweit der Anschlag des Befestigungselementes 3 nicht durch den Schlitz 7 begrenzt ist, als Anschlag für die Unterkante der Hülse 50. So kann ein axial möglichst langer Befestigungsbereich für das Befestigungselement 3 zur Verfügung gestellt werden, und da der freiliegende Bereich 16 an sich nur in der entspannten Position zugänglich sein muss, ergeben sich dadurch auch keine praktischen Nachteile. Zudem führt die Hülse 50 durch ihr gleitendes Anliegen an die zylindrische Aussenfläche des Bereiches 16 zu einer zusätzlichen Führung und Stabilisierung des Mechanismus.

**BEZUGSZEICHENLISTE**

| | | | |
|---|---|---|---|
| 1 | Dämpfungsvorrichtung | 26 | Führungsausnehmungen in 3 |
| 2 | Stange | 27 | axiale Führungsbereiche von 3 |
| 3 | Befestigungselement, Klemmelement | | |
| | | 28 | Führungsausnehmungen in 15 |
| 4 | Befestigungshülse | 29 | axiale Führungsbereiche von 15 |
| 5 | Stockgriff | | |
| 6 | gerippte Oberfläche von 4 | 30 | Spreizelement |
| 7 | Führungsschlitz | 31 | Schraubenkopf |
| 8 | Führungsstift | 32 | Mehrkant-Ausnehmung |
| 9 | Klemmvorrichtung für Handschlaufe | 33 | Längsschlitz |
| | | 34 | Vertiefung |
| 10 | Ausnehmung für Klemmvorrichtung | 35 | Schulter von 2 |
| | | 36 | Innenelement |
| 11 | Stockrohr | 37 | axiale Flügel |
| 12 | Ausnehmung in 5 für 11/1 | 38 | Innenkonus von 30 |
| 13 | Befestigungsbereich für 3 in 12 | 39 | Außenkonus von 36 |
| | | 40 | Sackloch für Schraube in 2 |
| 14 | Befestigungsabschnitt von 4 | 41 | Schraube |
| 15 | Absatz | 42 | Außengewinde von 41 |
| 16 | frei liegender Bereich von 4 | 43 | Außenrohr |
| 17 | Durchtrittsöffnung für 2 in 4 | 44 | Innenrohr |
| 18 | frei liegender Hohlraum im 3 | 45 | Manschette |
| 19 | quer verlaufende Durchtrittsöffnung in 2 für 8 | 46 | Innenraum von 4 |
| | | 47 | Boden von 46 |
| 20 | obere Elastomerfeder | 48 | Dämpfungselement für 8, umlaufender Ring aus elast.Material, Gummiring |
| 21 | untere Elastomerfeder | | |
| 22 | Spiralfeder | | |
| 23 | Führungselement / Stützelement für 22 an 20/21 | 49 | umlaufende Nut in 16 |
| | | 50 | Hülse |
| 24 | untere Auflagefläche von 2 | 51 | Flansch |
| 25 | axiale Öffnung | 52 | Kopfelement |

## Patentansprüche

1. Dämpfungsvorrichtung (1) für einen Stock, insbesondere Trekking-, Ski-, Wander-, oder Nordic-Walking-Stock, mit einer Befestigungshülse (4), mittels welcher die Dämpfungsvorrichtung (1) an einem ersten Rohrabschnitt (11,44) durch Einschub und Befestigung in diesem befestigt wird, und mit einem Befestigungselement (3), mittels welchem die Dämpfungsvorrichtung (1) an einem Stockgriff (5) oder einem zweiten Rohrabschnitt (43) mit größerem Innendurchmesser als dem ersten Rohrabschnitt (11,44) befestigt wird, wobei das Befestigungselement (3) bezüglich Befestigungshülse (4) in axialer Richtung gefedert verschieblich gelagert ist, indem eine mit dem Befestigungselement (3) verbundene oder einstückig mit diesem ausgebildete axial verlaufende Stange (2) angeordnet ist, welche in der Befestigungshülse (4) axial verschieblich gelagert ist und sich in einen zum Befestigungselement (3) offenen Innenraum (46) in der Befestigungshülse (4) hinein erstreckt, wobei der Innenraum (46) in Form eines Sackloches ausgebildet ist und zwischen dem Boden (47) und dem freien Ende der Stange (2) wenigstens ein Federelement (20-23) angeordnet ist,
wobei die Befestigungshülse (4) einen das dem Befestigungselement (3) abgewandte Ende bildenden Befestigungsabschnitt (14) aufweist, welcher im wesentlichen vollständig im ersten Rohrabschnitt (11,44) liegt, sowie einen dem Befestigungselement (3) zugewandten freiliegenden Bereich (16), der über das freie Ende des ersten Rohrabschnitts (11,44) hervor steht, und wobei in diesem freiliegenden Bereich (16) wenigstens ein Führungselement (7, 8) angeordnet ist, welches sowohl die axiale Beweglichkeit von Befestigungshülse (4) und Befestigungselement (3) in axialer Richtung begrenzt als auch die relative Rotation dieser beiden Elemente im wesentlichen verhindert, und wobei die Stange (2) wenigstens im in die Befestigungshülse (4) eingreifenden Bereich aus einem Kunststoffmaterial oder aus Metall besteht, und wobei es sich beim Befestigungselement (3) um eine Spreizvorrichtung handelt, mit welcher der erste Rohrabschnitt (11,44) lösbar respektive verstellbar im Stockgriff (5) oder einem zweiten Rohrabschnitt (43) mit größerem Innendurchmesser befestigbar ist.

2. Dämpfungsvorrichtung nach Anspruch 1, **dadurch gekennzeichnet, dass** es sich beim Führungselement um wenigstens einen, bevorzugt zwei gegenüber angeordnete axial verlaufende, in beide axiale Richtungen begrenzte Schlitze (7) in der zylindrischen Seitenwand des freiliegenden Bereiches (16) der Befestigungshülse (4) handelt, in welcher ein senkrecht zur Achse der Dämpfungsvorrichtung verlaufender Querstift (8), der an der Stange (2) befestigt ist, gefangen ist, oder dass es sich beim Führungselement um wenigstens einen axial verlaufenden, in beide axiale Richtungen begrenzten Schlitz (7) in der Stange (2) handelt, in welchem ein senkrecht zur Achse der Dämpfungsvorrichtung verlaufender Querstift (8), der in der zylindrischen Seitenwand des freiliegenden Bereiches (16) der Befestigungshülse (4) befestigt ist, gefangen ist, wobei bevorzugtermassen in wenigstens einer der Anschlagspositionen des Querstifts (8) im Schlitz (7) wenigstens ein Dämpfungselement (48), bevorzugtermassen in Form eines umlaufenden, in einer Nut (49) des freiliegenden Bereiches (16) eingelassenen Rings aus elastischem Material, vorgesehen ist.

3. Dämpfungsvorrichtung nach einem der vorhergehenden Ansprüche, **dadurch gekennzeichnet, dass** das Befestigungselement (3) und der frei liegende Bereich (16) wenigstens dann, wenn die Dämpfungsvorrichtung im gespannten Zustand ist und Befestigungshülse (4) und Befestigungselement (3) in Kontakt oder maximal angenähert sind, wenigstens teilweise ineinandergreifen, wobei dabei vorzugsweise der frei liegende Bereich (16) und das Befestigungselement (3) über korrespondierende axial verlaufende Führungsausnehmungen (26,28) und durch diese gebildete, umfangsmäßig dazwischen liegende, die radiale Außenwand bildende axiale Führungsbereiche (27,29) verfügen, und dabei die Führungsausnehmungen (26) des Befestigungselementes (3) in verschieblichen Eingriff mit den axialen Führungsbereichen (29) des freiliegenden Bereiches (16) und die Führungsausnehmungen (28) des freiliegenden Bereiches (16) in verschieblichen Eingriff mit den axialen Führungsbereichen (27) des Befestigungselementes (3).

4. Dämpfungsvorrichtung nach Anspruch 3, **dadurch gekennzeichnet, dass** der frei liegende Bereich (16) und das Befestigungselement (3) jeweils wenigstens 2 axiale Führungsbereiche (27,29) und zwei axiale Führungsausnehmungen (26,28) aufweisen, vorzugsweise beide davon wenigstens 3, insbesondere vorzugsweise beide davon wenigstens 4 aufweisen, wobei bevorzugtermassen diese Bereiche (26-29) eine axiale Länge aufweisen, welche wenigstens 50 %, vorzugsweise wenigstens 75 %, insbesondere bevorzugt wenigstens 80 % der gesamten axialen Länge des Befestigungselementes (3) und/oder des freiliegenden Bereiches (16) ausmacht.

5. Dämpfungsvorrichtung nach einem der vorhergehenden Ansprüche, **dadurch gekennzeichnet, dass** das dem Boden (47) zugewandte Ende (24) der Stange (2) in direktem Kontakt mit dem Federelement (20-23) steht, vorzugsweise mit einer Elastomerfeder (20) die entweder das Federelement als Ganzes bildet oder Bestandteil davon ist, wobei es sich weiterhin vorzugsweise beim Federelement um einen Aufbau handelt, bei welchem zwischen dem Boden (47) und dem genannten Ende (24) eine serielle Anordnung von Federelementen mit wenigstens einer Elastomerfeder (20,21) und einer Spiralfeder (22), wobei es sich insbesondere vorzugsweise um eine serielle Anordnung bestehend aus der folgenden Folge von Elementen: erste Elastomerfeder in direktem Kontakt mit dem Ende (24) der Stange (2) gefolgt zum Boden (47) von einer Spiralfeder (23) gefolgt zum Boden von wenigstens einer weiteren Elastomerfeder (21), die ihrerseits mit der Unterseite auf dem Boden (47) aufliegt.

6. Dämpfungsvorrichtung nach einem der vorhergehenden Ansprüche, **dadurch gekennzeichnet, dass** die Stange (2) wenigstens in jenem Abschnitt, welcher durch eine entsprechende axiale Öffnung (17) im freiliegenden Bereich (16) geführt ist, eine nicht-kreisförmigen Querschnitt, vorzugsweise einen rechteckigen oder quadratischen Querschnitt aufweist.

7. Dämpfungsvorrichtung nach einem der vorhergehenden Ansprüche, **dadurch gekennzeichnet, dass** es sich beim Befestigungselement (3) um eine Spreizvorrichtung handelt, welche auf einer drehfest auf der Stange (2) befestigten Schraube (41) drehbar vorgesehen ist, und wobei weiterhin vorzugsweise die Spreizvorrichtung einen auf der Schraube über ein Innengewinde drehbar gelagertes Innenelement (36) umfasst mit einem einzigen, sich zur Dämpfungsvorrichtung aufweitenden Außenkonus (39) und einem dieses Innenelement (36) in einem Innenraum aufnehmendes Spreizelement (30) mit einem entsprechenden, sich zur Dämpfungsvorrichtung hin aufweitenden Innenkonus (38), welches Spreizelement (30) entlang der axialen Richtung ohne Drehbewegung im Rahmen eines geringen Spiels zwischen einem unteren Anschlag (35) und einem oberen Anschlag (31) beweglich ist, wobei insbesondere bevorzugt das Spreizelement über wenigstens einen axialen Schlitz (36) verfügt, in welchem am Innenelement (36) angeformte Flügel (37) wenigstens teilweise in axialer Richtung verschieblich eingreifen.

8. Dämpfungsvorrichtung nach Anspruch 7, **dadurch gekennzeichnet, dass** die Spreizvorrichtung auf einer drehfest auf der Stange (2) befestigten Schraube (41) mit Außengewinde, vorzugsweise aus einem metallischen Material, vorgesehen ist, wobei diese Schraube (41) in einem für diese Schraube in der Stange (2) vorgesehenen axialen Sackloch (40) eingelassen und befestigt ist, und vorzugsweise am der Befestigungshülse (4) gegenüberliegenden Ende ein oberes Anschlagselement für ein Spreizelement (30), vorzugsweise in Form eines Schraubenkopfes (31) aufweist, und wobei insbesondere vorzugsweise die Stange (2) am der Schraube (41) zugewandten freien Ende einen umlaufenden, einstückig mit der Stange (2) ausgebildeten Flansch (35) aufweist, vorzugsweise als unteres Anschlagselement für ein Spreizelement (30) der Spreizvorrichtung.

9. Dämpfungsvorrichtung nach einem der vorhergehenden Ansprüche, **dadurch gekennzeichnet, dass** die Stange (2) aus einem thermoplastischen Kunststoffmaterial besteht ausgewählt aus der Gruppe: Polyamid, Polyester, Polycarbonat, Polyethylen, Polypropylen oder einer Kombination davon, gegebenenfalls in faserverstärkter Form ausgebildet ist, wobei es sich vorzugsweise um Polyamid handelt.

10. Dämpfungsvorrichtung nach einem der vorhergehenden Ansprüche, **dadurch gekennzeichnet, dass** die Befestigungshülse (4) einstückig ausgebildet ist und aus einem Metall, insbesondere einem Leichtmetall, und/oder einem thermoplastischen Kunststoffmaterial besteht ausgewählt aus der Gruppe: Polyamid, Polyester, Polycarbonat, Polyethylen, Polypropylen oder einer Kombination davon, gegebenenfalls in faserverstärkter Form ausgebildet ist, wobei es sich vorzugsweise um Polyamid handelt.

11. Dämpfungsvorrichtung nach einem der vorhergehenden Ansprüche, **dadurch gekennzeichnet, dass** das Befestigungselement (3) eine axiale Länge im Bereich von 1-4 cm, vorzugsweise im Bereich von 1.5-3 cm aufweist, und dass der frei liegende Bereich (16) eine axiale Länge im Bereich von 0.5-4 cm, vorzugsweise im Bereich von 1.5-3 cm aufweist, und dass vorzugsweise der Befestigungsabschnitt (14) eine axiale Länge im Bereich von 2-10 cm, vorzugsweise im Bereich von 4-7 cm aufweist.

12. Dämpfungsvorrichtung nach einem der vorhergehenden Ansprüche, **dadurch gekennzeichnet, dass** der Boden (47) geschlossen ausgebildet ist oder höchstens eine zentrale axiale Öffnung (25) mit einem Durchmesser von weniger als 2 mm, vorzugsweise von weniger als 1 mm aufweist.

13. Dämpfungsvorrichtung nach einem der vorhergehenden Ansprüche, **dadurch gekennzeichnet, dass** die Stange (2) und das Befestigungselement (3) einstückig ausgebildet sind, und das Befestigungselement (3) im Stockgriff (5) respektive im ersten Rohrabschnitt (43) durch eine Verbindung als Formschluss, und/oder Kraftschluss und/oder Stoffschluss fest befestigt ist.

14. Trekking-, Ski-, Wander-, oder Nordic-Walking-Stock mit einer Dämpfungsvorrichtung nach einem der vorhergehenden Ansprüche, wobei der Stock einen Stockgriff (5) aufweist mit einer axialen Ausnehmung (12) zur Befestigung eines Stockrohres (11) und wobei die Dämpfungsvorrichtung (1) in dieser axialen Ausnehmung (12) im griffkopfnahen Bereich mit dem Befestigungselement (3) befestigt ist, und das Stockrohr (11) mit seinem oberen freien Ende die Befestigungshülse (4) im Befestigungsabschnitt (14) umschliessend befestigt ist.

15. Trekking-, Ski-, Wander-, oder Nordic-Walking-Stock mit einer Dämpfungsvorrichtung nach einem der vorhergehenden Ansprüche, wobei der Stock wenigstens zwei axial verschieblich zueinander angeordnete Rohrabschnitte (43,44) aufweist, und wobei die Dämpfungsvorrichtung in einem ersten Rohrabschnitt (44) mit geringerem Durchmesser über den Befestigungsabschnitt (14) befestigt ist und in einem zweiten Rohrabschnitt (43) mit größerem Durchmesser über das Befestigungselement (3), welche vorzugsweise als lösbare Spreizvorrichtung ausgebildet ist, befestigt ist.

## Claims

1. A damping device (1) for a pole, in particular a trekking, ski, hiking, or Nordic walking pole, having
an attaching sleeve (4) by means of which the damping device (1) is attached to a first tube segment (11, 44) by inserting and attaching therein, and
having an attaching element (3) by means of which the damping device (1) is attached to a pole handle (5) or a second tube segment (43) having a larger inner diameter than the first tube segment (11, 44),
wherein the attaching element (3) is thereby movably supported in a spring-loaded manner in the axial direction with respect to the attaching sleeve (4),
wherein a rod (2) connected to or integral to the attaching element (3) runs axially and is axially movably supported in the attaching sleeve (4) and extends into an inner chamber (46) in the attaching sleeve (4) open to the attaching element (3),
wherein the inner chamber (46) is designed as a blind hole and at least one spring element (20-23) is disposed between the floor (47) of said inner chamber and the free end of the rod (2),
wherein the attaching sleeve (4) comprises an attaching segment (14) forming the end opposite the attaching element (3) and substantially lying completely within the first tube segment (11, 44), and an exposed region (16) facing the attaching element (3) and protruding past the free end of the first tube segment (11, 44), and
wherein at least one guide element (7, 8) is also disposed in said exposed region (16) and both bounds the axial movability of the attaching sleeve (4) and attaching element (3) in the axial direction and substantially prevents the relative rotation of said two elements, and
wherein the rod (2) consists of a plastic material or of metal at least in the region engaging with the attaching sleeve (4)
and wherein the attaching element (3) comprises a spreading device with which the first tube segment (11, 44) can be attached detachably or adjustably in the pole handle (5) or a second tube segment (43) having a larger inside diameter.

2. The damping device according to claim 1, **characterised in that** the guide element comprises at least one, preferably two, slits (7), which are arranged opposite one another, run axially and are delimited in both axial directions, in the cylindrical side wall of the exposed region (16) of the attaching sleeve (4), in which a transverse pin (8) running perpendicularly to the axis of the damping device, which is attached to the rod (2), is captured, or that the guide element comprises at least one slit (7), which runs axially and is delimited in both axial directions, in the rod (2), in which a transverse pin (8) running perpendicularly to the axis of the damping device, which is fixed in the cylindrical side wall of the exposed region (16) of the attaching sleeve (4), is captured, wherein preferably in at least one of the stop positions of the transverse pin (8) in the slit (7), at least one damping element (48), preferably in the form of a circumferential ring made of elastic material, let into a groove (49) of the exposed region (16) is provided.

3. The damping element according to any one the preceding claims, **characterised in that** the attaching element (3) and the exposed region (16) at least partially intermesh at least when the damping device is in the tensioned state and attaching sleeve (4) and attaching element (3) are in contact or in maximal proximity, wherein preferably the exposed region (16) and the attaching element (3) have corresponding axially running guide recesses (26, 28) and circumferentially interposed axial guide regions (27, 29) formed by these guide recesses and forming the radial outer wall, and at the same time the guide recesses (26) of the attaching element (3) are in displaceable engagement with the axial guide regions (29) of the exposed region (16) and the guide recesses (28) of the exposed region (16) are in displaceable engagement with the axial guide regions (27) of the attaching element (3).

4. The damping device according to claim 3, **characterised in that** the exposed region (16) and the attaching element (3) each have at least two axial guide regions (27, 29) and two axial guide recesses (26, 28), preferably at least three of both, in particular at least four of both, wherein preferably these regions (26-29) have an axial length which is at least 50%, preferably at least 75%, particularly preferably at least 80% of the total axial length of the attaching element (3) and/or the exposed region (16).

5. The damping element according to any one the preceding claims, **characterised in that** the end (24) of the rod (2) facing the floor (47) is in direct contact with the spring element (20-23), preferably with an elastomer spring (20) which either forms the spring element as a whole or is part thereof, wherein the spring element preferably further comprises a structure in which a serial arrangement of spring elements comprising at least one elastomer spring (20, 21) and one spiral spring (22) is provided between the floor (47) and the said end (24), wherein this particularly preferably comprises a serial arrangement consisting of the following sequence of elements: first elastomer spring in direct contact with the end (24) of the rod (2) followed towards the floor (47) by a spiral spring (23) followed towards the floor by at least one further elastomer spring (21) which for its part rests with its underside on the floor (47).

6. The damping element according to any one the preceding claims, **characterised in that** the rod (2) has a non-circular cross-section, preferably a rectangular or square cross-section, at least **in that** section which is guided through a corresponding axial opening (17) in the exposed region (16).

7. The damping element according to any one the preceding claims, **characterised in that** the spreading device which is provided rotatably on a screw (41) attached in a rotationally fixed manner on the rod (2), and wherein furthermore the spreading device comprises an inner element (36) mounted rotatably on the screw by means of an internal thread with a single outer cone (39) which widens towards the damping device and a spreading element (30) which receives this inner element (36) in an inner space, with a corresponding inner cone (38) which expands towards the damping device, which spreading element (30) is movable along the axial direction without rotational movement within the boundaries of a small play between a lower stop (35) and an upper stop (31), wherein particularly preferably the spreading element has at least one axial slit (36), in which wings (37) formed on the inner element (36) engage at least partially displaceably in the axial direction.

8. The damping device according to claim 7, **characterised in that** the spreading device is provided with an external thread, preferably made of a metal material, on a screw (41) attached in a rotationally fixed manner on the rod (2), wherein this screw (41) is let in and fastened in an axial blind hole (40) provided for this screw in the rod (2) and preferably at the end opposite the attaching sleeve (4) has an upper stop element for a spreading element (30), preferably in the form of a screw head (31) and wherein particularly preferably the rod (2) has a circumferential flange (35) formed integrally with the rod (2) at the free end facing the screw (41), preferably as lower stop element for a spreading element (30) of the spreading device.

9. The damping element according to any one the preceding claims, **characterised in that** the rod (2) consists of a thermoplastic plastic material selected from the group: polyamide, polyester, polycarbonate, polyethylene, polypropylene or a combination thereof, is optionally formed in fibre-reinforced form, wherein this preferably comprises polyamide.

10. The damping element according to any one the preceding claims, **characterised in that** the attaching sleeve (4) is formed integrally and consists of metal, in particular a light metal, and/or a thermoplastic plastic material selected from the group: polyamide, polyester, polycarbonate, polyethylene, polypropylene or a combination thereof, is optionally formed in fibre-reinforced form, wherein this preferably comprises polyamide.

11. The damping element according to any one the preceding claims, **characterised in that** the attaching element (3) has an axial length in the range of 1-4 cm, preferably in the range of 1.5-3 cm, and that the exposed region (16) has an axial length in the range of 0.5-4 cm, preferably in the range of 1.5-3 cm, and that preferably the attaching section (14) has an axial length in the range of 2-10 cm, preferably in the range of 4-7 cm.

12. The damping element according to any one the preceding claims, **characterised in that** the floor (47) is configured to be closed or at most has a central axial opening (25) having a diameter of less than 2 mm, preferably of less than 1 mm.

13. The damping element according to any one the preceding claims, **characterised in that** the rod (2) and the attaching element (3) are formed integrally and the attaching element (3) is firmly fastened in the pole handle (5) or in the first tube segment (43) by means of a connection as a tight fit, and/or as a force fit and/or adhesive bond.

14. A trekking, ski, hiking, or Nordic walking pole having a damping device according to any one of the preceding claims, wherein the pole has a pole handle (5) with an axial recess (12) for attaching a pole tube (11) and wherein the damping device (1) is attached in this axial recess (12) in the region near the handle head with the attaching element (3) and the pole tube (11) is attached with its upper free end surrounding the attaching sleeve (4) in the attaching section (14).

15. A trekking, ski, hiking, or Nordic walking pole having a damping device according to any one of the preceding claims, wherein the pole has at least two tube segments (43, 44) arranged axially displaceably to one another and wherein the damping device is attached in a first tube section (44) with a smaller diameter by means of the attaching section (14) and in a second tube segment (43) having a larger diameter by means of the attaching element (3) which is preferably configured as a detachable spreading device.

## Revendications

1. Dispositif d'amortissement (1) pour un bâton, en particulier un bâton de marche, de ski, de randonnée, ou de marche nordique, comprenant une douille de fixation (4) au moyen de laquelle le dispositif d'amortissement (1) est fixé à une première portion tubulaire (11, 44) par enfoncement et fixation dans celle-ci, et comprenant un élément de fixation (3) au moyen duquel le dispositif d'amortissement (1) est fixé à une poignée de bâton (5) ou à une deuxième portion tubulaire (43) de plus grand diamètre intérieur que la première portion tubulaire (11, 44), l'élément de fixation (3) étant supporté de manière déplaçable dans la direction axiale avec suspension par ressort par rapport à la douille de fixation (4) en disposant une tige (2) s'étendant axialement, connectée à l'élément de fixation (3) ou réalisée d'une seule pièce avec celui-ci, laquelle est supportée de manière déplaçable axialement dans la douille de fixation (4) et s'étend dans la douille de fixation (4) dans un espace intérieur (46) ouvert vers l'élément de fixation (3), l'espace intérieur (46) étant réalisé sous forme de trou borgne et au moins un élément de ressort (20-23) étant disposé entre le fond (47) et l'extrémité libre de la tige (2),
la douille de fixation (4) présentant une portion de fixation (14) formant l'extrémité opposée à l'élément de fixation (3), qui est située essentiellement complètement dans la première portion tubulaire (11, 44), ainsi qu'une région exposée (16) tournée vers l'élément de fixation (3), qui fait saillie au-delà de l'extrémité libre de la première portion tubulaire (11, 44), et au moins un élément de guidage (7, 8) étant disposé dans cette région exposée (16), lequel délimite à la fois la mobilité axiale de la douille de fixation (4) et de l'élément de fixation (3) dans la direction axiale et empêche également essentiellement la rotation de ces deux éléments l'un par rapport à l'autre, et la tige (2), au moins dans la région s'engageant dans la douille de fixation (4), se composant d'un matériau en plastique ou de métal, et l'élément de fixation (3) étant un dispositif d'écartement avec lequel la première portion tubulaire (11, 44) peut être fixée de manière amovible ou réglable dans la poignée de bâton (5) ou dans une deuxième portion tubulaire (43) de plus grand diamètre intérieur.

2. Dispositif d'amortissement selon la revendication 1, **caractérisé en ce que** l'élément de guidage est constitué par au moins une fente (7), de préférence deux fentes, limitées dans les deux directions axiales, s'étendant axialement et en regard l'une de l'autre dans la paroi latérale cylindrique de la région exposée (16) de la douille de fixation (4), dans laquelle ou lesquelles est reçue une goupille transversale (8) s'étendant perpendiculairement à l'axe du dispositif d'amortissement, qui est fixée à la tige (2), ou **en ce que** l'élément de guidage est constitué par au moins une fente (7) s'étendant axialement dans la tige (2), limitée dans les deux directions axiales, dans laquelle est reçue une goupille transversale (8) s'étendant perpendiculairement à l'axe du dispositif d'amortissement, laquelle est fixée dans la paroi latérale cylindrique de la région exposée (16) de la douille de fixation (4), au moins un élément d'amortissement (48) étant prévu de préférence dans au moins l'une des positions de butée de la goupille transversale (8) dans la fente (7), de préférence sous la forme d'une bague périphérique en matériau élastique, introduite dans une rainure (49) de la région exposée (16).

3. Dispositif d'amortissement selon l'une quelconque des revendications précédentes, **caractérisé en ce que** l'élément de fixation (3) et la région exposée (16) viennent en prise l'un dans l'autre au moins en partie, au moins lorsque le dispositif d'amortissement est dans l'état tendu et que la douille de fixation (4) et l'élément de fixation (3) sont en contact ou sont rapprochés au maximum, en l'occurrence de préférence la région exposée (16) et l'élément de fixation (3) disposant d'évidements de guidage correspondants (26, 28) s'étendant axialement et de régions de guidage axiales (27, 29) formées par ceux-ci, situées entre eux sur la périphérie et formant la paroi extérieure radiale, et les évidements de guidage (26) de l'élément de fixation (3) étant en prise mobile avec les régions de guidage axiales (29) de la région exposée (16) et les évidements de guidage (28) de la région exposée (16) étant en prise mobile avec les régions de guidage axiales (27) de l'élément de fixation (3).

4. Dispositif d'amortissement selon la revendication 3, **caractérisé en ce que** la région exposée (16) et l'élément de fixation (3) présentent à chaque fois au moins 2 régions de guidage axiales (27, 29) et deux évidements de guidage axiaux (26, 28), de préférence les deux en présentant au moins 3, en particulier de préférence les deux en présentant au moins 4, ces régions (26-29) présentant de préférence une longueur axiale qui constitue au moins 50 %, de préférence au moins 75 %, en particulier de préférence au moins 80 % de toute la longueur axiale de l'élément de fixation (3) et/ou de la région exposée (16).

5. Dispositif d'amortissement selon l'une quelconque des revendications précédentes, **caractérisé en ce que** l'extrémité (24) de la tige (2) tournée vers le fond (47) est en contact direct avec l'élément de ressort (20-23), de préférence avec un ressort en élastomère (20) qui soit constitue l'élément de ressort en tant que tout, soit en fait partie, l'élément de ressort étant en outre de préférence une construction dans laquelle entre le fond (47) et ladite extrémité (24) est prévu un agencement en série d'éléments de ressort avec au moins un ressort en élastomère (20, 21) et un ressort spiral (22), cet agencement étant notamment de préférence un agencement en série constitué de la séquence d'éléments suivants : un premier ressort en élastomère en contact direct avec l'extrémité (24) de la tige (2), suivi, vers le fond (47), d'un ressort spiral (23), suivi, vers le fond, d'au moins un ressort en élastomère supplémentaire (21) qui repose pour sa part avec son côté inférieur sur le fond (47).

6. Dispositif d'amortissement selon l'une quelconque des revendications précédentes, **caractérisé en ce que** la tige (2), au moins dans la portion qui est guidée à travers une ouverture axiale correspondante (17) dans la région exposée (16), présente une section transversale non circulaire, de préférence une section transversale rectangulaire ou quadratique.

7. Dispositif d'amortissement selon l'une quelconque des revendications précédentes, **caractérisé en ce que** l'élément de fixation (3) est un dispositif d'écartement qui est prévu de manière rotative sur une vis (41) fixée de manière solidaire en rotation sur la tige (2), et en outre de préférence le dispositif d'écartement comprenant un élément intérieur (36) supporté à rotation sur la vis par le biais d'un filetage interne, avec un cône extérieur unique (39) s'élargissant vers le dispositif d'amortissement et un élément d'écartement (30) recevant cet élément intérieur (36) dans un espace intérieur, avec un cône intérieur correspondant (38) s'élargissant vers le dispositif d'amortissement, lequel élément d'écartement (30) peut être déplacé le long de la direction axiale sans mouvement de rotation dans le cadre d'un faible jeu entre une butée inférieure (35) et une butée supérieure (31), en particulier de préférence l'élément d'écartement disposant d'au moins une fente axiale (36) dans laquelle des ailes (37), façonnées au niveau de l'élément intérieur (36), s'engagent au moins en partie de manière déplaçable dans la direction axiale.

8. Dispositif d'amortissement selon la revendication 7, **caractérisé en ce que** le dispositif d'écartement est prévu sur une vis (41) fixée de manière solidaire en rotation sur la tige (2) avec un filetage extérieur, de préférence constituée d'un matériau métallique, cette vis (41) étant introduite et fixée dans un trou borgne axial (40) prévu pour cette vis dans la tige (2), et présentant de préférence, à l'extrémité opposée à la douille de fixation (4), un élément de butée supérieur pour un élément d'écartement (30), de préférence sous la forme d'une tête de vis (31), et notamment de préférence la tige (2) présentant à l'extrémité libre tournée vers la vis (41), une bride (35) périphérique réalisée d'une seule pièce avec la tige (2), de préférence en tant qu'élément de butée inférieur pour un élément d'écartement (30) du dispositif d'écartement.

9. Dispositif d'amortissement selon l'une quelconque des revendications précédentes, **caractérisé en ce que** la tige (2) se compose d'un matériau en plastique thermoplastique choisi parmi le groupe suivant : polyamide, polyester, polycarbonate, polyéthylène, polypropylène ou une combinaison de ceux-ci, éventuellement est réalisée sous forme renforcée par des fibres, s'agissant de préférence de polyamide.

10. Dispositif d'amortissement selon l'une quelconque des revendications précédentes, **caractérisé en ce que** la douille de fixation (4) est réalisée d'une seule pièce et se compose d'un métal, en particulier d'un métal léger et/ou d'un matériau en plastique thermoplastique, choisi parmi le groupe suivant : polyamide, polyester, polycarbonate, polyéthylène, polypropylène ou une combinaison de ceux-ci, éventuellement est réalisée sous forme renforcée par des fibres, s'agissant de préférence de polyamide.

11. Dispositif d'amortissement selon l'une quelconque des revendications précédentes, **caractérisé en ce que** l'élément de fixation (3) présente une longueur axiale de l'ordre de 1-4 cm, de préférence de l'ordre de 1,5-3 cm, et **en ce que** la région exposée (16) présente une longueur axiale de l'ordre de 0,5-4 cm, de préférence de l'ordre de 1,5-3 cm, et **en ce que** de préférence la portion de fixation (14) présente une longueur axiale de l'ordre de 2-10 cm, de préférence de l'ordre de 4-7 cm.

12. Dispositif d'amortissement selon l'une quelconque des revendications précédentes, **caractérisé en ce que** le fond (47) est réalisé sous forme fermée ou présente tout au plus une ouverture axiale centrale (25) ayant un diamètre inférieur à 2 mm, de préférence inférieur à 1 mm.

13. Dispositif d'amortissement selon l'une quelconque des revendications précédentes, **caractérisé en ce que** la tige (2) et l'élément de fixation (3) sont réalisés d'une seule pièce, et l'élément de fixation (3) est fixé fermement dans la poignée de bâton (5), respectivement dans la première portion tubulaire (43), par une connexion par engagement par correspondance de formes, et/ou par force et/ou par liaison de matière.

14. Bâton de marche, de ski, de randonnée, ou de marche nordique, comprenant un dispositif d'amortissement selon l'une quelconque des revendications précédentes, le bâton présentant une poignée de bâton (5) avec un évidement axial (12) pour la fixation d'un tube de bâton (11) et le dispositif d'amortissement (1) étant fixé à l'élément de fixation (3) dans cet évidement axial (12) dans la région proche de la tête de préhension, et le tube de bâton (11) étant fixé par son extrémité libre supérieure en entourant la douille de fixation (4) dans la portion de fixation (14).

15. Bâton de marche, de ski, de randonnée, ou de marche nordique, comprenant un dispositif d'amortissement selon l'une quelconque des revendications précédentes, le bâton présentant au moins deux portions tubulaire disposées de manière déplaçable axialement l'une par rapport à l'autre (43, 44), et le dispositif d'amortissement étant fixé dans une première portion tubulaire (44) de plus faible diamètre par le biais de la portion de fixation (14) et étant fixé dans une deuxième portion tubulaire (43) de plus grand diamètre par le biais de l'élément de fixation (3) qui est de préférence réalisé sous forme de dispositif d'écartement amovible.
